# FASCICULE DE BREVET EUROPEEN

(11) **EP 0 991 740 B1**
(45) Date de publication et mention de la délivrance du brevet: **16.06.2004**
(21) Numéro de dépôt: 99915848.8
(22) Date de dépôt: 27.04.1999
(51) Int. Cl.: C10M 173/02, B21C 9/02

(54) **UTILISATION DANS UN LUBRIFIANT DE TREFILAGE, D'UNE SUSPENSION D'UN SEL DE COBALT ET/OU DE NICKEL COMME AGENT D'ADHERENCE, DE LUBRIFICATION ,SUSPENSION ET SON OBTENTION**
VERWENDUNG EINER KOBALT- UND/ODER NICKELSALZ ENTHALTENDEN SUSPENSION IN EINEM SCHMIERMITTEL ZUM DRAHTZIEHEN ALS HAFTVERMITTLER UND GLEITMITTEL, DIESE SUSPENSION UND IHRE HERSTELLUNG
USE IN A COLD DRAWING LUBRICANT, OF A COBALT AND/OR NICKEL SALT SUSPENSION AS ADHESIVE, LUBRICATING, SUSPENDING AGENT AND METHOD FOR OBTAINING SAME

(30) Priorité: 28.04.1998 FR 9805315
(43) Date de publication de la demande: 12.04.2000
(73) Titulaire: RHODIA CHIMIE, 92408 Courbevoie Cédex (FR)
(72) Inventeur: LORENTZ, Gilles, F-92400 Courbevoie (FR); LANNIBOIS-DREAN, Hélène, F-94220 Charenton le Pont (FR)
(74) Mandataire: Boittiaux, Vincent
(86) Numéro de dépôt international: PCT/FR1999/000996
(87) Numéro de publication internationale: WO 1999/055809

(56) Documents cités:
- EP-A- 0 137 986
- EP-A- 0 383 150
- DE-A- 2 108 210
- FR-A- 810 226
- GB-A- 887 606
- GB-A- 2 076 320
- GB-A- 2 087 914
- US-A- 1 919 718
- US-A- 5 208 074
- US-A- 5 389 163

## Description

La présente invention a pour objet l'utilisation en tant qu'additif permettant l'adhérence d'un fil d'acier laitonné et de caoutchouc, d'une suspension aqueuse comprenant au moins un composé du type d'un sel de cobalt et/ou de nickel d'acide carboxylique saturé ou non (i) ou d'ester phosphate (ii), ou d'un boroacylate de cobalt et/ou de nickel ; et au moins un tensioactif, dans un lubrifiant de tréfilage.

L'invention concerne de même l'utilisation en tant qu'additif de lubrification du tréfilage d'un fil d'acier laitonné, d'une telle suspension aqueuse.

En outre, l'invention a pour objet une suspension aqueuse comprenant au moins un composé du type d'un sel de cobalt et/ou de nickel d'acide saturé ou non (i) d'un ester phosphate (ii), ou d'un boroacylate de cobalt et/ou de nickel, et au moins un tensioactif non ionique ou anionique ; le rapport pondéral du composé (i), (ii) et/ou (iii) au tensioactif étant compris entre 0,5 et 10 ; ainsi que des procédés pour l'obtenir.

Le domaine de la présente invention fait donc partie, pour l'essentiel, de l'industrie du pneumatique et notamment de la préparation du pneumatique. Plus particulièrement la présente invention concerne l'amélioration de l'adhérence du caoutchouc et du câblé métallique employé pour renforcer le pneumatique. Ce câblé métallique est constitué de plusieurs fils de faible diamètre, câblés, puis tissés de manière à former un treillis qui est ensuite incorporé dans le caoutchouc.

Généralement, le fil câblé est à base d'acier recouvert de laiton, de manière à faciliter l'adhérence entre le câblé et la matrice polymérique. En effet, le cuivre du laiton réagit avec le soufre qui est employé comme agent de vulcanisation du caoutchouc. En outre, le caractère ductile du laiton facilite la déformation de l'acier laitonné dans la filière du tréfilage.

Cette solution est très satisfaisante au moins pour ce qui concerne l'adhérence initiale. Mais on a constaté une dégradation des propriétés des pneumatiques ainsi équipés, au cours du temps, due notamment à une migration du zinc sous l'effet de conditions extérieures (humidité, présence de chlorure de sodium). Effectivement, le zinc diffuse dans le caoutchouc et créé des zones riches en oxyde de zinc. Or cet oxyde de zinc se transforme en hydroxyde de zinc qui est fragile, ce qui a pour conséquence de dégrader les propriétés mécaniques du pneumatique.

On a pensé remplacer le laiton par un alliage plus complexe, bicouche, obtenu, avant le tréfilage, par électrodéposition. Ce dernier comprend une première couche à base de zinc et de 1% de cobalt ; la seconde à base de nickel et de 20 % de zinc. L'inconvénient majeur de cette méthode est qu'elle remplace la couche de laiton, qui présente de nombreux avantages lors de l'opération de tréfilage. En fait, l'opération de tréfilage du câblé recouvert de ce système bicouche est rendue très complexe. En effet, alors que le tréfilage des fils d'acier laitonnés a lieu classiquement à une vitesse de l'ordre de 1000 m/minute, avec une usure des filières tous les 2000 km, les fils d'acier recouverts du système bicouche ne peuvent être tréfilés qu'à des vitesse de l'ordre de 700 m/minute avec une usure des filières tous les 0,2 à 100 km (G. Orjela, S.J. Harris, M. Vincent, F. Tommasini ; Summary Report on Brite-Euram Project BREU-0424, KGK Kautschuk Gummmi Kunststoffe 50 - Jahrgang, nr. 11/97 ; 778-785). Finalement, l'opération de tréfilage de fils recouverts du système bicouche n'est pas industrielle.

L'objet de la présente invention est de proposer une autre voie de traitement de fils d'acier laitonnés, dans le but d'améliorer l'adhérence des câblés avec le caoutchouc lors de la préparation du pneumatique.

Ces buts et d'autres sont atteints par la présente invention qui a donc pour objet l'utilisation en tant qu'agent d'adhérence d'un fil d'acier laitonné et de caoutchouc, d'une suspension aqueuse comprenant au moins un composé du type d'un sel de cobalt et/ou de nickel d'un acide carboxylique saturé ou non (i) ou d'un ester phosphate (ii), ou d'un boroacylate de cobalt et/ou de nickel ; et au moins un tensioactif non ionique ou anionique ; le rapport pondéral du composé (i), (ii) et/ou (iii) au tensioactif étant compris entre 0,5 et 10.

Le procédé selon l'invention est particulièrement simple car ladite suspension est ajoutée à la solution lubrifiante mise en oeuvre lors de l'opération de tréfilage du fil.

En outre, l'avantage apporté par le laiton lors de l'opération de tréfilage est conservé. Ainsi, les conditions classiques et industrielles de tréfilage peuvent toujours être appliquées.

Enfin, le procédé selon l'invention est très efficace car après l'opération de tréfilage, on constate que le fil présente du cobalt ou du nickel à sa surface. Ceci a pour conséquence d'améliorer la résistance de l'adhérence au vieillissement du treillis comprenant les câblés tissés.

Il est à noter que l'addition du composé de cobalt ou du nickel à la solution lubrifiante employée lors du tréfilage ne pouvait se faire de manière évidente.

En effet, les solutions lubrifiantes classiquement employées lors du tréfilage sont à base d'agents complexants du cobalt et du nickel. Ainsi, on remarque qu'une suspension d'un composé de cobalt ou de nickel, donne, au bout de quelques minutes, après la mise en contact avec la solution lubrifiante, un précipité qui décante, et qui rend inutilisable la suspension résultante, par épuisement des bases lubrifiantes qui la constituent.

Par contre, il a été trouvé de manière surprenante que la suspension selon la présente invention, lorsqu'elle est ajoutée à une solution lubrifiante comprenant des agents complexants du cobalt ou du nickel, ne provoque pas l'apparition d'un tel précipité. En outre, notamment dans le cas de sels de cobalt et/ou de nickel, la suspension résultante se présente sous la forme d'une suspension légèrement opalescente, ne présentant pas de flocs visibles à l'oeil nu, stable et ne décantant pas.

On a de même constaté d'une manière totalement imprévue, et cela constitue, comme indiqué auparavant, un autre objet de l'invention, qu'une suspension aqueuse comprenant au moins un composé de cobalt et/ou de nickel tel que défini précédemment et au moins un tensioactif non ionique ou anionique ; le rapport pondéral du composé au tensioactif étant compris entre 0,5 et 10, avait un rôle de lubrifiant, lors de l'opération de tréfilage. En effet, on a remarqué que la consommation de filières de tréfilage était plus faible lorsque la suspension selon l'invention était présente dans le lubrifiant de tréfilage.

Mais d'autres avantages et caractéristiques de la présente invention apparaîtront plus clairement à la lecture de la description et de l'exemple qui va suivre.

Pour des questions de simplification de l'exposé de l'invention, la suspension va tout d'abord être décrite, de même que son obtention.

Ainsi que cela a été indiqué auparavant, la suspension mise en oeuvre dans l'invention est à base d'un composé de cobalt et/ou de nickel.

Il est à noter que dans ce qui va suivre, les composés à base de cobalt ou de nickel seront nommés cobalt/nickel, sachant que cette dénomination s'applique pour l'un ou l'autre des métaux, de même qu'à leur combinaison.

Selon un mode de réalisation particulièrement avantageux de l'invention, le métal mis en oeuvre est le cobalt.

Selon une première variante (i) de l'invention, la suspension aqueuse est à base d'au moins un composé de cobalt/nickel qui est un sel d'un acide carboxylique.

Selon un mode de réalisation particulier de l'invention, le sel de cobalt/nickel d'acide carboxylique est insoluble dans les milieux aqueux.

Plus particulièrement, le sel dérive d'un acide carboxylique, saturé ou non comprenant 5 à 40 atomes de carbone.

De préférence, l'acide correspond à la formule suivante :

R¹ - COOH ;

formule dans laquelle R¹ représente un radical alkyle, alcényle présentant une ou plusieurs insaturations éthyléniques, linéaire ou ramifié, ayant de 5 à 40 atomes de carbone (l'atome de carbone du groupement carboxylique étant compris), éventuellement substitué par un ou plusieurs radicaux hydroxyles et/ou une fonction carboxylique.

Selon un mode de réalisation avantageux de l'invention, la suspension comprend un sel d'acide correspondant à la formule précitée, dans laquelle R¹ représente un radical alkyle comprenant 7 à 30 atomes de carbone, éventuellement substitué par un ou plusieurs radicaux hydroxyles et/ou une fonction carboxylique.

Il est à noter que la seconde fonction carboxylique, si elle est présente, peut se trouver en bout de chaîne ou non.

De préférence, on met en oeuvre un acide gras, comprenant plus particulièrement une seule fonction carboxylique.

Comme exemple d'acides gras saturés, on peut citer les acides stéarique, palmitique, béhénique.

Comme exemples d'acides gras insaturés, on peut citer les acides gras insaturés présentant une seule double liaison tel que les acides lindérique, myristoléique, palmitoléique, oléique, pétrosélénique, doeglique, gadoléique, érucique ; les acides gras insaturés présentant deux doubles liaisons tels que l'acide linoléique ; les acides gras insaturés présentant 3 doubles liaisons tels que l'acide linolénique ; les acides gras insaturés présentant plus de 4 doubles liaisons tels que les acides isanique, stéarodonique, arachidonique, chypanodonique ; les acides gras insaturés porteurs de groupe hydroxyle tel que l'acide ricinoléique ainsi que leurs mélanges.

Parmi les acides précités, on met en oeuvre préférentiellement les acides palmitique, béhénique, stéarique, paimitoléique, oléique, pétrosélénique, érucique, linoléique, linolénique, ricinoléique.

Il est à noter que l'on ne sortirait pas du cadre de la présente invention en mettant en oeuvre un ou plusieurs acides.

Le rapport molaire de l'acide mis en oeuvre, par rapport au cobalt/nickel, exprimé en métal, est d'au moins 1/1. Plus particulièrement, ledit rapport molaire évolue entre 2/1 et 10/1.

En outre, la suspension comprend au moins un agent tensioactif non ionique ou anionique.

Parmi les tensioactifs non ioniques convenables, on peut citer entre autres :
. les alkylphénols polyoxyalkylénés dont le substituant alkyle est en C₆-C₁₂ ;
. les mono-, di- ou tri-(alkylaryl) phénol polyoxyalkylénés dont le substituant alkyle est en C₁-C₆ ;
. les alcools aliphatiques en C₈-C₂₂ polyoxyalkylénés ;
. les triglycérides polyoxyalkylénés ,
. les acides gras polyoxyalkylénés ,
. les esters de sorbitan polyoxyalkylénés ,
. les amines grasses polyoxyalkylénées ,
. les amides d'acides gras en C₈-C₂₀, éventuellement polyoxyalkylénés ;
. les glucosamide, glucamide ;
. les alkylpolyglycosides (US 4 565 647) ;
. les glycérolamides dérivés de N-alkylamines (US 5 223 179 et FR 1 585 966) ;
. les produits résultant de la condensation de l'oxyde d'éthylène avec un composé hydrophobe résultant de la condensation de l'oxyde de propylène avec le propylène glycol (Pluronic®) ;
. les produits résultant de la condensation de l'oxyde d'éthylène avec un composé résultant de la condensation de l'oxyde de propylène avec l'éthylènediamine (Tetronic®) ;
. les produits résultant de la condensation de l'oxyde d'éthylène avec un composé hydrophobe résultant de la condensation de l'oxyde de propylène avec un alcool d'origine terpénique (Rhodoclean® ; FR 2 721 921) ;
. les oxydes d'amines tels que les oxydes d'alkyl C₁₀-C₁₈ diméthylamines, les oxydes d'alkoxy C₈-C₂₂ éthyl dihydroxy éthylamines ;

Le nombre de motifs polyoxyalkylénés, s'ils sont présents, de ces tensioactifs non ioniques varie habituellement de 2 à 100 selon le HLB (balance hydrophilie/lipophilie) souhaité. De préférence ce nombre se situe entre 2 et 50. Il est à noter que par motifs polyoxyalkylénés, on entend couvrir les oxyéthylénés, oxypropyiénés, ou leurs mélanges.

Parmi les alkylphénols polyoxyalkylénés (oxyéthyléné, oxyéthyléné/oxypropyléné) convenables, on peut citer ceux présentant 1 ou 2 groupes alkyle, linéaires ou ramifiés, ayant 4 à 12 atomes de carbone, notamment octyle, nonyle ou dodécyle. Ils contiennent plus particulièrement 3 à 25 motifs oxyéthylénés, ou oxyéthylénés et oxypropylénés. A titre d'exemple, on peut citer les Triton® X-45, X-114, X-100 ou X-102 , l'Igepal® NP14.

En ce qui concerne les alcools aliphatiques en C₈-C₂₂ polyoxyalkylénés, on peut mettre de préférence en oeuvre des alcools présentant 1 à 25 motifs polyoxyalkylénés (oxyéthyléné, oxyéthyléné/oxypropyléné). A titre d'exemple, on peut citer les Rhodasurf® CET 5, CET 2 ; les Tergitol® 15-S-9, 24-L-6 NMW , les Neodol® 45-9, 23-65, 45-7, 45-4, Kyro Eob® ; les Plantaren®.

Les triglycérides polyoxyalkylénés (oxyéthyléné, oxyéthyléné/oxypropyléné) peuvent être des triglycérides d'origine végétale ou animale (tels que le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco). Ils sont de préférence polyoxyéthylénés. Le terme triglycéride polyoxyalkyléné vise dans la présente invention, aussi bien les produits obtenus par alcoxylation d'un triglycéride par l'oxyde d'éthylène (éventuellement avec de l'oxyde de propylène) que ceux obtenus par transestérification d'un triglycéride par un polyéthylèneglycol (éventuellement avec du polypropylèneglycol).

Les acides gras polyoxyalkylénés (oxyéthyléné, oxyéthyléné/oxypropyléné) sont des esters d'acides gras (tels que par exemple l'acide oléique, l'acide stéarique) et sont de préférence éthoxylés. Il est de même à noter que le terme acide gras polyoxyalkyléné inclut aussi bien les produits obtenus par alcoxylation d'un acide gras par l'oxyde d'éthylène (éventuellement avec de l'oxyde de propylène) que ceux obtenus par estérification d'un acide gras par un polyéthylèneglycol (éventuellement avec du polypropyléneglycol).

Les esters de sorbitan polyoxyalkylénés (oxyéthyléné, oxyéthyléné/oxypropyléné) sont des esters de sorbitol cyclisé d'acides gras de C₁₀ à C₂₀ comme l'acide laurique, l'acide stéarique ou l'acide oléique, et sont de préférence éthoxylés.

Les amines grasses polyoxyalkylénés (oxyéthyléné, oxyéthyléné/oxypropyléné) ont généralement de 10 à 22 atomes de carbone, et sont de préférence éthoxylées.

Parmi les tensioactifs anioniques convenables, on peut citer à titre d'exemple :
. les alkylesters sulfonates de formule R-CH(SO₃M)-COOR', où R représente un radical alkyle en C₈₋₂₀, de préférence en C₁₀-C₁₆, R' un radical alkyle en C₁-C₆, de préférence en C₁-C₃ et M un cation alcalin (sodium, potassium, lithium), ammonium - N(R₃)⁺ avec R, identiques ou non, représentant un atome d'hydrogène, un radical hydrocarboné comprenant 1 à 4 atomes de carbone, éventuellement porteur d'un radical hydroxyle ;
. les alkylsulfates ou alkylarylsulfates de formule ROSO₃M, où R représente un radical alkyle, ou hydroxyalkyle en C₁₀-C₂₄, M représentant un atome d'hydrogène ou un cation de même définition que ci-dessus,

On peut de même mettre en oeuvre les dérivés éthoxylénés (OE) et/ou propoxyiénés (OP), de ces tensioactifs. Le nombre moyen de motifs (OE et/ou OP) est dans ce cas compris entre 0,5 à 6, de préférence de 0,5 à 3 motifs;
. les alcools gras polyoxyalkylénés sulfatés ; les di(phényl-1 éthyl) phénols polyoxyalkylénés sulfatés ; les tri(phényl-1 éthyl) phénols polyoxyalkylénés sulfatés ; les alkylphénols polyoxyalkylénés sulfatés ;
. les alkylamides sulfates de formule RCONHR'OSO₃M où R représente un radical alkyle en C₂-C₂₂, R' un radical alkyle en C₂-C₃, M représentant un atome d'hydrogène ou un cation de même définition que ci-dessus, ainsi que leurs dérivés éthoxylénés (OE) et/ou propoxylénés (OP), présentant en moyenne de 0,5 à 60 motifs OE et/ou OP;
. les sels d'acides gras saturés ou insaturés en C₈-C₂₄, de préférence en C₁₄-C₂₀, les alkylbenzènesulfonates en C₉-C₂₀, les alkylsulfonates primaires ou secondaires en C₈-C₂₂, les alkylglycérol sulfonates, les acides polycarboxyliques sulfonés décrits dans GB-A-1 082 179, les sulfonates de paraffine ;
. les alcools gras polyoxyalkylénés mono ou diesters phosphates ,les di(phényl-1 éthyl) phénols polyoxyalkylénés mono ou diesters phosphates, les tri(phényl-1 éthyl) phénols polyoxyalkylénés mono ou diesters phosphates, les alkylphénols polyoxyalkylénés mono ou diesters phosphates ;
. les N-acyl N-alkyltaurates, , les alkyliséthionates, les alkylsuccinamates les alkylsulfosuccinates, les monoesters ou diesters de sulfosuccinates, les N-acyl sarcosinates, les sulfates d'alkylglycosides, les polyéthoxycarboxylates, le cation étant un métal alcalin (sodium, potassium, lithium), un ammonium - N(R₃)⁺ avec R, identiques ou non, représentant un atome d'hydrogène, un radical hydrocarboné comprenant 1 à 4 atomes de carbone, éventuellement porteur d'un radical hydroxyle.

Il est à noter que les tensioactifs non ioniques et anioniques décrits précédemment peuvent être utilisés seuls ou en mélanges.

Selon une autre caractéristique de l'invention, le rapport pondéral du composé (sel) de cobait/nickel au tensioactif est compris entre 0,5 et 10, de préférence entre 1 et 5.

Selon une deuxième variante de l'invention (ii), la suspension comprend au moins un composé de cobalt/nickel qui est un sel d'ester phosphate.

Plus précisément, le sel dérive d'un ester phosphate de formule suivante :

[R²(OX)ₙ]ₚ-P(=O)(OM)_{p'}

R² est un radical hydrocarboné aliphatique, cycloaliphatique ou aromatique, saturé ou insaturé, contenant 1 à 30 atomes de carbone,
X est un radical alkylène linéaire ou ramifié comportant 2 à 4 atomes de carbone,
M est un atome d'hydrogène, un métal alcalin (sodium, potassium de préférence), ou un radical ammonium de formule -N(R₃)⁺, dans laquelle R, identiques ou non, représentent un atome d'hydrogène, un radical alkyle en C₁-C₄, comprenant éventuellement un atome d'oxygène,
n est une valeur allant de 0 à 100,
p, p' sont égaux à 1 ou 2, à la condition que p + p' = 3.

Ce qui a été indiqué auparavant à propos de la nature du tensioactif non ionique et anionique, ainsi que les proportions respectives, reste valable et ne sera pas repris ici. Plus particulièrement, le rapport molaire de l'ester phosphate mis en oeuvre, par rapport au cobalt/nickel, exprimé en métal, est d'au moins 1/1.

Selon une troisième variante de l'invention (iii), la suspension comprend au moins un composé qui est un boroacylate de composé de cobalt/nickel.

Plus particulièrement, le boroacylate présente la formule suivante :

B (O-Co-A)m(O-Ni-A)3-m

formule dans laquelle :
A, identiques ou différents, représentent un reste d'un acide monocarboxylique saturé ou non, comprenant 5 à 24 atomes de carbone ; d'un acide résinique ; d'un acide aromatique comprenant 7 à 11 atomes de carbone ; d'un acide naphténique,
m est un nombre entier ou non compris entre 0 et 3.

Plus particulièrement, à titre d'exemples d'acides carboxylques saturés, on peut citer l'acide pentanoïque, l'acide diméthyl-2,2 pentanoïque, l'acide diméthyl-4,4 pentanoïque, l'acide éthyl-2 pentanoïque, l'acide triméthyl-2,4,4 pentanoïque, l'acide n- octanoïque, l'acide diméthyl-2,2 hexanoïque, l'acide diméthyl-2,2 heptanoïque, l'acide triméthyl-2,5,5 hexanoïque, le n-décanoïque, les mélanges d'acides trialkyl-2,2,2 acétique, connus sous les noms acides néodécanoïques ou versatiques. De même sont susceptibles de convenir, les acides palmitique, béhénique, stéarique, palmitoléique, oléique, pétrosélénique, érucique, linoléique, linoténique, ricinoléique.

Pour ce qui concerne les acides résiniques, ces acides sont dérivés de résines de bois, tels que l'acide abiétique par exemple.

Les acides aromatiques tels que l'acide benzoïque peuvent conveir, de même que leurs dérivés substitués par des radicaux alkyle, alcoxy, aminé, halogène, comme l'acide salicylique, chlorobenzoïque, phatlique, téréphtalique, cinnamique, etc.

Ces composés sont bien connus et sont notamment commercialisés sous la marque Manobond® (Rhodia Ltd).

Un premier mode de préparation de la suspension mise en oeuvre selon l'invention consiste à mettre en contact, en milieu aqueux, un dérivé hydrosoluble d'un acide carboxylique (i) ou d'un ester phosphate (ii), avec un sel de cobalt et/ou de nickel, en présence d'au moins un tensioactif non ionique ou anionique.

Le cobalt et le nickel sont utilisés plus particulièrement sous la forme d'au moins un sel soluble dans l'eau. A titre de sel convenable, on peut citer par exemple les halogénures, tels que les chlorures, de même que les sels d'acides organiques comme le formiate, l'acétate, entre autres. De préférence, on utilise des sels d'acides organiques comme l'acétate.

En ce qui concerne le dérivé hydrosoluble d'acide carboxylique, on met en oeuvre plus particulièrement, un sel de métal alcalin, et plus particulièrement un sel de sodium ; l'acide carboxylique ayant été défini auparavant.

Il est à noter que le procédé selon l'invention peut avantageusement être mis en oeuvre à partir du sel hydrosoluble précité, directement, ou bien en mettant en oeuvre un précurseur d'un tel composé, par exemple l'acide ou un ester de cet acide, ou encore un anhydride (dans le cas où l'acide mis en oeuvre comprend deux fonctions carboxyliques).

Dans le cas où un ester est mis en oeuvre, on utilise de préférence un ester dérivant d'un alcool, saturé ou non, comprenant 1 à 6 atomes de carbone.

Si un précurseur est mis en oeuvre, il est préférable de transformer ce précurseur en sel hydrosoluble en premier lieu, et plus particulièrement avant la mise en contact avec le sel de cobalt ou de nickel et le tensioactif.

Dans le cas où l'on met en oeuvre un dérivé hydrosoluble d'ester phosphate, celui-ci peut être choisi parmi les esters phosphates définis auparavant. De préférence, on met en oeuvre un sel de sodium d'ester phosphate.

Le procédé de préparation de la suspension, selon ce premier mode, consiste plus particulièrement à mettre en oeuvre les étapes suivantes :
1) On prépare une première solution aqueuse d'un dérivé hydrosoluble d'acide carboxylique (i) ou d'ester phosphate (ii), que l'on met en contact avec au moins un tensioactif de préférence non ionique ;
2) On prépare une seconde solution aqueuse comprenant au moins un sel de cobalt et/ou de nickel ;
3) On mélange les deux solutions obtenues.

De préférence, cette opération de mélange a lieu en introduisant la solution de sel de cobalt et/ou de nickel dans celle comprenant le sel hydrosoluble d'acide ou d'ester phosphate.

La mise en contact peut être réalisée sous ou sans agitation.

Par ailleurs, les quantités des composés mis en oeuvre sont telles que les différents rapports, comme le rapport molaire acide ou ester phosphate / métal (cobalt/nickel) et le rapport pondéral composé de métal (cobalt/nickel)/tensioactif, restent dans les gammes précisées.

Un autre mode de préparation de la suspension selon l'invention consiste à mettre en oeuvre une émulsion chaud. Ce mode de réalisation peut être mis en oeuvre pour l'obtention de chacun des composés (i) à (iii).

Plus particulièrement, on met en oeuvre les étapes suivantes :
1) on fond un composé de cobalt/nickel,
2) on prépare une solution aqueuse d'au moins un tensioactif,
3) on mélange à chaud et sous agitation, le composé fondu et la solution aqueuse de manière à obtenir une émulsion,
4) on laisse refroidir l'émulsion.

A l'issue de la dernière étape, le composé fondu de cobalt/nickel se solidifie pour donner une suspension.

Le composé employé dans la première étape est un composé (i), (ii) et/ou (iii) tels que définis auparavant.

De plus, le tensioactif utilisé lors de l'étape 2) est plus particulièrement choisi parmi les tensioactifs anioniques ou un mélange de tensioactifs anioniques et non ioniques. On pourra se référer, à ce sujet, aux deux listes de tensioactifs données auparavant.

Notons que les moyens d'agitation mis en oeuvre lors de l'étape de la préparation de l'émulsion doivent être choisis en fonction de la taille moyenne des gouttelettes, puis des particules solides résultantes, souhaitées. Généralement, les moyens mis en oeuvre sont tels que la taille des particules de l'émulsion soit inférieure à 1 µm.

La suspension selon l'invention est donc employée dans une solution lubrifiante de tréfilage, comme additif permettant une adhérence améliorée entre le fil destiné à être câblé et le caoutchouc.

Elle est de même employée comme additif permettant une amélioration de la lubrification durant l'opération de tréfilage.

Un autre objet de la présente invention est constitué par une solution lubrifiante de tréfilage comprenant la suspension de composé de cobalt/nickel selon l'invention.

Classiquement, les solutions lubrifiantes mises en oeuvre lors du tréfilage comprennent des acides gras, des esters phosphates, des amines, des agents anticorrosion du cuivre, des huiles (minérales, végétales).

Notons que par le terme général de solution, on entend désigner non seulement des solutions mais aussi des suspensions.

Ces composés représentent environ 20 à 90 % en poids de la solution lubrifiante, le complément étant de l'eau.

Les solutions lubrifiantes sont ensuite diluées à 5 - 15 % avant d'être mises en oeuvre dans les opérations de tréfilage.

Généralement, le pH des solutions lubrifiantes est compris entre 7,4 et 9, de préférence entre 7,6 et 8,6.

La suspension de composé de cobalt/nickel selon l'invention est donc ajoutée à la solution lubrifiante.

Ceci peut avoir lieu de diverses façons. La première consiste à ajouter la suspension de composé de cobalt/nickel selon l'invention à la solution lubrifiante préalablement diluée ou non. La seconde consiste à ajouter la suspension de composé de cobalt/nickel selon l'invention au moment de la dilution de la solution lubrifiante, avec l'eau de dilution par exemple.

Plus particulièrement on met en oeuvre la suspension de composé de cobalt/nickel selon l'invention dans des teneurs telles que la quantité de cobalt/nickel (exprimé en cobalt/nickel métallique) par rapport à la solution de tréfilage est comprise entre 50 et 5000 ppm.

Les opérations de tréfilage humide sont réalisées de manière connue dans le domaine. En résumé, le fil d'acier laitonné est passé à travers plusieurs filières, immergées dans la solution lubrifiante comprenant la suspension de composé de cobalt/nickel selon l'invention, afin de diminuer le diamètre du fil de 2 à 20 % par filière.

Le tréfilage est mis en oeuvre classiquement à des températures comprises entre 25 et 60°C.

Des exemples concrets mais non limitatifs de l'invention vont maintenant être présentés.

### EXEMPLE 1

### 1/ Préparation de la suspension d'oléate de cobalt

Solution A : *On prépare 31 ml d'une solution aqueuse comprenant 50 g/l d'oléate de sodium.

*Puis on mélange à cette solution, sous agitation, 5 ml d'une solution aqueuse d'Igépal NP14 à 32 g/l. On ajoute ensuite 4 ml d'eau.

On prépare ensuite 60 ml d'une solution aqueuse comprenant 10,5 g/l d'acétate de cobalt que l'on introduit dans la solution A obtenue précédemment.

On obtient alors une suspension stable d'oléate de cobalt et le diamètre médian des particules est de 0,08 µm (la répartition des tailles est déterminée par un granulomètre à diffraction laser type HORIBA LA-910).

### 2/ Utilisation de la suspension dans une opération de tréfilage

On prépare une dispersion lubrifiante comprenant le Supersol ADM (solution lubrifiante commercialisée par Rhodia Chimie) et la suspension d'oléate de cobalt obtenue au point 1/ de la manière suivante :

On prépare un mélange de 5 g de Supersol ADM avec 5 g de la suspension d'oléate de cobalt selon l'invention, et l'on agite le mélange à 800 tours/minute pendant 10 minutes.

Puis on ajoute 90 g de la suspension d'oléate de cobalt selon l'invention, sous agitation.

La teneur en cobalt métallique dans la dispersion lubrifiante ainsi obtenue est de 1400 ppm.

La dispersion lubrifiante diluée, ainsi obtenue est stable.

La taille médiane des particules de la dispersion lubrifiante est de 0,23 µm (la répartition des tailles est déterminée par un granulomètre à diffraction laser type HORIBA LA-910).

Il est à noter que la taille des particules est identique à celle des particules qui auraient été obtenues en diluant la même quantité de Supersol ADM dans l'eau pure.

Les particules de la suspension d'oléate de cobalt selon l'invention ne sont plus détectées dans la dispersion lubrifiante obtenue. En effet, le granulomètre donne une répartition en volume et n'est par conséquent sensible qu'aux plus grosses particules.

Ceci implique donc que la suspension d'oléate de cobalt est stable et ne décante pas lorsqu'elle est mise en contact avec la dispersion lubrifiante.

On effectue un test d'usure Falex sur un barreau de laiton enserré dans des mors en carbure de tungstène, baignant dans la dispersion lubrifiante comprenant l'oléate de cobalt, obtenue ci-dessus.

Le principe du test est de mesurer la perte de masse du barreau de laiton mis en rotation à 330 tours par minute sous une pression d'environ 567 kg (soit 1250 lbs) exercée par les mors pendant 10 minutes.

L'analyse ESCA du barreau ainsi traité montre que l'on a du cobalt à la surface.

### EXEMPLE 2

On prépare une dispersion lubrifiante comprenant le Supersol ADM (solution lubrifiante commercialisée par Rhodia Chimie) et la suspension d'oléate de cobalt obtenue au point 1/ de l'exemple 1, comme suit :

On prépare un mélange de 5 g de Supersol ADM avec 5 g de la suspension d'oléate de cobalt selon l'invention, et l'on agite le mélange à 800 tours/minute pendant 10 minutes.

Puis on ajoute 12 g de la suspension d'oléate de cobalt selon l'invention, et 80 g d'eau, sous agitation.

La teneur en cobalt métallique dans la dispersion lubrifiante ainsi obtenue est de 255 ppm.

On effectue le test d'usure Falex tel que décrit à l'exemple 1 avec, d'une part, une dispersion lubrifiante exempte de cobalt, et d'autre part, une dispersion lubrifiante comprenant 255 ppm de cobalt.

L'évaluation de la perte de masse du barreau est réalisée en pesant le barreau avant et après l'expérience d'usure.

Les résultats sont les suivants:

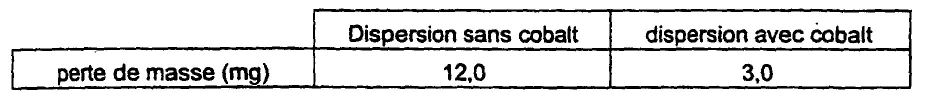

### EXEMPLE 3

On prépare 1000 kg d'une dispersion lubrifiante de la même manière que celle exposée à l'exemple 1.

La teneur en cobalt de la dispersion est de 255 ppm et la dispersion comprend en outre 8 % de Supersol ADM.

On réalise une opération de tréfilage d'un fil d'acier haute résistance laitonné (diamètre initial 1,3 mm et diamètre final 0,175 mm).

La vitesse de tréfilage est de 900 m/minute.

Les résultats sont les suivants :

Durant la première heure du tréfilage, on constate une usure immédiate des filières employées avec la dispersion lubrifiante exempte de cobalt. Cette usure a conduit, au bout d'une heure, à changer les filières car le diamètre du fil tréfilé était en dehors des spécifications souhaitées.

Par contre, pendant cette même période, aucune usure justifiant un changement des filières n'a été constatée, lorsque la dispersion lubrifiante selon l'invention a été mise en oeuvre.

De plus, après tréfilage de 750 kg de fil à une vitesse de 900 m/minute, l'utilisation de la dispersion lubrifiante selon l'invention a permis de diminuer de 40 % la consommation totale de filières.

Enfin, l'analyse ESCA du treillis câblé (steel cord câblé) montre que l'on trouve du cobalt en surface.

De plus, on a observé une amélioration de l'adhésion du treillis câblé avec la gomme du pneumatique, ainsi qu'une amélioration de la résistance de l'adhésion au vieillissement.

### EXEMPLE 4

### 1/ Préparation de la suspension d'ester phosphate de cobalt

On prépare une solution comprenant 20 ml d'une solution aqueuse comprenant 5 g/l d'ester phosphate Rhodafac PA 35 (neutralisé par NaOH 0,1 N à un pH = 8) et 5 ml Rhodasurf T80 (1g/l).

L'ester phosphate Rhodafac PA35 est un alcool C₁₆-C₁₈ éthoxylé (5OE) - commercialisé par Rhodia Chimie
Le tensioactif Alkamuls T80 est un monooléate de sorbitan éthoxylé (20OE) - commercialisé par Rhodia Chimie

On prépare ensuite 60 ml d'une solution aqueuse comprenant 1,75 g/l d'acétate de cobalt que l'on introduit dans la solution obtenue précédemment.

On obtient alors une suspension stable d'ester phosphate de cobalt. Le diamètre médian des particules est d'environ 0,15 µm.

### 2/ Utilisation de la suspension dans une opération de tréfilage

On procède comme expliqué dans l'exemple 1.

L'analyse ESCA du barreau traité montre que l'on a du cobalt à la surface.

## Revendications

1. Utilisation, dans une solution lubrifiante de tréfilage, en tant qu'agent d'adhérence d'un fil d'acier laitonné et de caoutchouc, d'une suspension aqueuse comprenant au moins un composé du type d'un sel de cobalt et/ou de nickel d'un acide carboxylique. saturé ou non (i), ou d'un ester phosphate (ii), ou d'un boroacylate de cobalt et/ou de nickel (iii), et au moins un tensioactif non ionique ou anionique ; le rapport pondéral du composé (i), (ii) et/ou (iii) au tensioactif étant compris entre 0,5 et 10.

2. Utilisation, dans une solution lubrifiante de tréfilage, en tant qu'agent de lubrification d'un fil d'acier laitonné lors de l'opération de tréfilage, d'une suspension aqueuse comprenant au moins un composé du type d'un sel de cobalt et/ou de nickel d'un acide carboxylique saturé ou non (i) ou d'un ester phosphate (ii), ou d'un boroacylate de cobalt et/ou de nickel (iii), et au moins un tensioactif non ionique ou anionique ; le rapport pondéral du composé (i), (ii) et/ou (iii) au tensioactif étant compris entre 0,5 et 10.

3. Utilisation selon l'une des revendications précédentes, **caractérisée en ce que** la suspension aqueuse comprend au moins un sel de cobalt et/ou de nickel d'un acide carboxylique saturé ou non (i), comprenant 5 à 40 atomes de carbone.

4. Utilisation selon la revendication précédente, **caractérisée en ce que** la suspension aqueuse de sel de cobalt et/ou de nickel dérive d'un acide de formule suivante :
R¹ - COOH ;
formule dans laquelle R¹ représente un radical alkyle, alcényle présentant une ou plusieurs insaturations éthyléniques, linéaire ou ramifié, ayant de 5 à 40 atomes de carbone (l'atome de carbone du groupement carboxylique étant compris), éventuellement substitué par un ou plusieurs radicaux hydroxyles et/ou une fonction carboxylique.

5. Utilisation selon la revendication précédente, **caractérisée en ce que** l'acide correspond à la formule précitée, dans laquelle R¹ représente un radical alkyle comprenant 7 à 30 atomes de carbone (l'atome de carbone du groupement carboxylique étant compris), éventuellement substitué par un ou plusieurs radicaux hydroxyles et/ou une fonction carboxylique.

6. Utilisation selon l'une des revendications 1 ou 2, **caractérisée en ce que** la suspension aqueuse de sel de cobalt et/ou de nickel d'ester phosphate (ii) dérive d'un ester phosphate de formule suivante :
[R²(OX)ₙ]ₚ-P(=O)(OM)_{p'}
R² est un radical hydrocarboné aliphatique, cycloaliphatique ou aromatique, saturé ou insaturé, contenant 1 à 30 atomes de carbone,
X est un radical alkylène linéaire ou ramifié comportant 2 à 4 atomes de carbone,
M est un atome d'hydrogène, un métal alcalin (sodium, potassium de préférence), ou un radical ammonium de formule -N(R₃)⁺, dans laquelle R, identiques ou non, représentent un atome d'hydrogène, un radical alkyle en C₁-C₄, comprenant éventuellement un atome d'oxygène,
n est une valeur allant de 0 à 100,
p, p' sont égaux à 1 ou 2, à la condition que p + p' = 3.

7. Utilisation selon l'une des revendications 1 ou 2, **caractérisée en ce que** le boroacylate de nickel et/ou de cobalt présente la formule suivante :
B (O-Co-A)ₘ(O-Ni-A)₃₋ₘ
formule dans laquelle :
A, identiques ou différents, représentent un reste d'un acide monocarboxylique saturé ou non, comprenant 7 à 24 atomes de carbone ; d'un acide résinique ; d'un acide aromatique comprenant 7 à 11 atomes de carbone ; d'un acide naphténique,
m est un nombre entier ou non compris entre 0 et 3.

8. Utilisation selon l'une quelconque des revendications précédentes, **caractérisée en ce que** le tensioactif est choisi parmi les composés suivants, ainsi que leurs mélanges :
Non ionique :
. les alkylphénols polyoxyalkylénés dont le substituant alkyle est en C₆-C₁₂ ;
. les mono-, di- ou tri-(alkylaryl) phénol polyoxyalkylénés dont le substituant alkyle est en C₁-C₆ ;
. les alcools aliphatiques en C₈-C₂₂ polyoxyalkylénés ;
. les triglycérides polyoxyalkylénés ,
. les acides gras polyoxyalkylénés ,
. les esters de sorbitan polyoxyalkylénés ,
. les amines grasses polyoxyalkylénées ,
. les amides d'acides gras en C₈-C₂₀, éventuellement polyoxyalkylénés ;
. les glucosamide, glucamide ;
. les alkylpolyglycosides ;
. les glycérolamides dérivés de N-alkylamines ;
. les produits résultant de la condensation de l'oxyde d'éthylène avec un composé hydrophobe résultant de la condensation de l'oxyde de propylène avec le propylène glycol ;
. les produits résultant de la condensation de l'oxyde d'éthylène avec un composé résultant de la condensation de l'oxyde de propylène avec l'éthylènediamine ;
. les produits résultant de la condensation de l'oxyde d'éthylène avec un composé hydrophobe résultant de la condensation de l'oxyde de propylène avec un alcool d'origine terpénique ;
. les oxydes d'amines tels que les oxydes d'alkyl C₁₀-C₁₈ diméthylamines, les oxydes d'alkoxy C₈-C₂₂ éthyl dihydroxy éthytamines ;
Anionique :
. les alkylesters sulfonates de formule R-CH(SO₃M)-COOR', où R représente un radical alkyle en C₈-C₂₀, R' un radical alkyle en C₁-C₆, et M un cation alcalin, ammonium -N(R₃)⁺ avec R, identiques ou non, représentant un atome d'hydrogène, un radical hydrocarboné comprenant 1 à 4 atomes de carbone, éventuellement porteur d'un radical hydroxyle ;
. les alkylsulfates ou alkylarylsulfates de formule ROSO₃M, où R représente un radical alkyle, ou hydroxyalkyle en C₁₀-C₂₄, M représentant un atome d'hydrogène ou un cation de même définition que ci-dessus, ainsi que leurs dérivés éthoxylénés (OE) et/ou propoxylénés (OP) ;
. les alcools gras polyoxyalkylénés sulfatés ; les di(phényl-1 éthyl) phénols polyoxyalkylénés sulfatés ; les tri(phényl-1 éthyl) phénols polyoxyalkylénés sulfatés ; les alkylphénols polyoxyalkylénés sulfatés ;
. les alkylamides sulfates de formule RCONHR'OSO₃M où R représente un radical alkyle en C₂-C₂₂, R' un radical alkyle en C₂-C₃, M représentant un atome d'hydrogène ou un cation de même définition que ci-dessus, ainsi que leurs dérivés éthoxylénés (OE) et/ou propoxylénés (OP) ;
. les sels d'acides gras saturés ou insaturés en C₈-C₂₄, les alkylbenzènesulfonates en C₉-C₂₀, les alkylsulfonates primaires ou secondaires en C₈-C₂₂, les alkylglycérol sulfonates, les acides polycarboxyliques sulfonés, les sulfonates de paraffine,
. les alcools gras polyoxyalkylénés mono ou diesters phosphates ,les di(phényl-1 éthyl) phénols polyoxyalkylénés mono ou diesters phosphates, les tri(phényl-1 éthyl) phénols polyoxyalkylénés mono ou diesters phosphates, les alkylphénols polyoxyalkylénés mono ou diesters phosphates.
. les N-acyl N-alkyltaurates, les alkyliséthionates, les alkylsuccinamates les alkylsulfosuccinates, les monoesters ou diesters de sulfosuccinates, les N-acyl sarcosinates, les sulfates d'alkylglycosides, les polyéthoxycarboxylates, le cation étant un métal alcalin, un ammonium - N(R₃)⁺ avec R, identiques ou non, représentant un atome d'hydrogène, un radical hydrocarboné comprenant 1 à 4 atomes de carbone, éventuellement porteur d'un radical hydroxyle.

9. Utilisation selon l'une quelconque des revendications précédentes, **caractérisée en ce que** le rapport pondéral du composé (i), (ii) et/ou (iii) au tensioactif est compris entre 1 et 5.

10. Suspension aqueuse comprenant au moins un composé du type d'un sel de cobalt et/ou de nickel d'un acide carboxylique saturé ou non (i), ou d'un ester phosphate (ii), ou d'un boroacylate de cobalt et/ou de nickel (iii); et au moins un tensioactif non ionique ou anionique ; le rapport pondéral du composé (i), (ii) et/ou (iii) au tensioactif étant compris entre 0,5 et 10.

11. Suspension selon la revendication précédente, **caractérisée en ce que** le sel de cobalt et/ou de nickel d'acide carboxylique, dérive d'un acide de formule suivante :
R¹ - COOH ;
formule dans laquelle R¹ représente un radical alkyle, alcényle présentant une ou plusieurs insaturations éthyléniques, linéaire ou ramifié, ayant de 5 à 40 atomes de carbone (l'atome de carbone du groupement carboxylique étant compris), éventuellement substitué par un ou plusieurs radicaux hydroxyles et/ou une fonction carboxylique.

12. Suspension selon l'une des revendications 10 ou 11, **caractérisée en ce que** l'acide comprend une seule fonction carboxylique.

13. Suspension selon l'une des revendications 10 à 12, **caractérisée en ce que** l'acide est choisi parmi les acides palmitique, béhénique, stéarique, palmitoléique, oléique, pétrosélénique, érucique, linoléique, linolénique, ricinoléique.

14. Suspension selon la revendication 10, **caractérisée en ce que** le sel de cobalt et/ou de nickel d'ester phosphate (ii) dérive d'un ester phosphate de formule suivante :
[R² (OX)ₙ]ₚ-P(=O)(OM)_{p'}
R² est un radical hydrocarboné aliphatique, cycloaliphatique ou aromatique, saturé ou insaturé, contenant 1 à 30 atomes de carbone,
X est un radical alkylène linéaire ou ramifié comportant 2 à 4 atomes de carbone,
M est un atome d'hydrogène, un métal alcalin (sodium, potassium de préférence), ou un radical ammonium de formule -N(R₃)⁺, dans laquelle R, identiques ou non, représentent un atome d'hydrogène, un radical alkyle en C₁-C₄, comprenant éventuellement un atome d'oxygène,
n est une valeur allant de 0 à 100,
p, p' sont égaux à 1 ou 2, à la condition que p + p' = 3.

15. Suspension selon la revendication 10, **caractérisée en ce que** le boroacylate de nickel et/ou de cobalt présente la formule suivante :
B (O-Co-A)ₘ(O-Ni-A)₃₋ₘ
formule dans laquelle :
A, identiques ou différents, représentent un reste d'un acide monocarboxylique saturé ou non, comprenant 7 à 24 atomes de carbone ; d'un acide résinique ; d'un acide aromatique comprenant 7 à 11 atomes de carbone ; d'un acide naphténique,
m est un nombre entier ou non compris entre 0 et 3.

16. Suspension selon l'une quelconque des revendications 10 à 15, **caractérisée en ce que** le tensioactif est choisi parmi les composés suivants, ainsi que leurs mélanges :
Non ionique :
. les alkylphénols polyoxyalkylénés dont le substituant alkyle est en C₆-C₁₂ ;
. les mono-, di- ou tri-(alkylaryl) phénol polyoxyalkylénés dont le substituant alkyle est en C₁-C₆ ;
. les alcools aliphatiques en C₈-C₂₂ polyoxyalkylénés ;
. les triglycérides polyoxyalkylénés ,
. les acides gras polyoxyalkylénés ,
. les esters de sorbitan polyoxyalkylénés ,
. les amines grasses polyoxyalkylénées ,
. les amides d'acides gras en C₈-C₂₀, éventuellement polyoxyalkylénés ;
. les glucosamide, glucamide ;
. les alkylpolyglycosides ;
. les glycérolamides dérivés de N-alkylamines ;
. les produits résultant de la condensation de l'oxyde d'éthylène avec un composé hydrophobe résultant de la condensation de l'oxyde de propylène avec le propylène glycol ;
. les produits résultant de la condensation de l'oxyde d'éthylène avec un composé résultant de la condensation de l'oxyde de propylène avec l'éthylènediamine ;
. les produits résultant de la condensation de l'oxyde d'éthylène avec un composé hydrophobe résultant de la condensation de l'oxyde de propylène avec un alcool d'origine terpénique ;
. les oxydes d'amines tels que les oxydes d'alkyl C₁₀-C₁₈ diméthylamines, les oxydes d'alkoxy C₈-C₂₂ éthyl dihydroxy éthylamines ;
Anionique :
. les alkylesters sulfonates de formule R-CH(SO₃M)-COOR', où R représente un radical alkyle en C₈-C₂₀, R' un radical alkyle en C₁-C₆, et M un cation alcalin, ammonium -N(R₃)⁺ avec R, identiques ou non, représentant un atome d'hydrogène, un radical hydrocarboné comprenant 1 à 4 atomes de carbone, éventuellement porteur d'un radical hydroxyle ;
. les alkylsulfates ou alkylarylsulfates de formule ROSO₃M, où R représente un radical alkyle, ou hydroxyalkyle en C₁₀-C₂₄, M représentant un atome d'hydrogène ou un cation de même définition que ci-dessus, ainsi que leurs dérivés éthoxylénés (OE) et/ou propoxylénés (OP) ;
. les alcools gras polyoxyalkylénés sulfatés ; les di(phényl-1 éthyl) phénols polyoxyalkylénés sulfatés ; les tri(phényl-1 éthyl) phénols polyoxyalkylénés sulfatés ; les alkylphénols polyoxyalkylénés sulfatés ;
. les alkylamides sulfates de formule RCONHR'OSO₃M où R représente un radical alkyle en C₂-C₂₂, R' un radical alkyle en C₂-C₃, M représentant un atome d'hydrogène ou un cation de même définition que ci-dessus, ainsi que leurs dérivés éthoxylénés (OE) et/ou propoxylénés (OP) ;
. les sels d'acides gras saturés ou insaturés en C₈-C₂₄, les alkylbenzènesulfonates en C₉-C₂₀, les alkylsulfonates primaires ou secondaires en C₈-C₂₂, les alkylglycérol sulfonates, les acides polycarboxyliques sulfonés, les sulfonates de paraffine,
. les alcools gras polyoxyalkylénés mono ou diesters phosphates ,les di(phényl-1 éthyl) phénols polyoxyalkylénés mono ou diesters phosphates, les tri(phényl-1 éthyl) phénols polyoxyalkylénés mono ou diesters phosphates, les alkylphénols polyoxyalkylénés mono ou diesters phosphates.
. les N-acyl N-alkyltaurates, les alkyliséthionates, les alkylsuccinamates les alkylsulfosuccinates, les monoesters ou diesters de sulfosuccinates, les N-acyl sarcosinates, les sulfates d'alkylglycosides, les polyéthoxycarboxylates, le cation étant un métal alcalin, un ammonium - N(R₃)⁺ avec R, identiques ou non, représentant un atome d'hydrogène, un radical hydrocarboné comprenant 1 à 4 atomes de carbone, éventuellement porteur d'un radical hydroxyle.

17. Suspension selon l'une quelconque des revendications 10 à 16, **caractérisée en ce que** le rapport pondéral du composé (i), (ii) et/ou (iii) au tensioactif est compris entre 1 et 5.

18. Procédé de préparation d'une suspension selon l'une quelconque des revendications 10 à 17, **caractérisé en ce que** l'on met en contact, en milieu aqueux, un dérivé hydrosoluble d'un acide carboxylique (i), d'un ester phosphate (ii), avec un sel de cobalt et/ou de nickel, en présence d'au moins un tensioactif.

19. Procédé de préparation d'une suspension selon l'une quelconque des revendications 10 à 17, **caractérisé en ce que** l'on met en oeuvre les étapes suivantes :
1) on fond un composé de cobalt/nickel,
2) on prépare une solution aqueuse comprenant au moins un tensioactif,
3) on mélange à chaud et sous agitation, le composé et la solution aqueuse, de manière à obtenir une émulsion,
4) on laisse refroidir l'émulsion.

20. Solution lubrifiante de tréfilage comprenant la suspension selon l'une quelconque des revendications 10 à 17.

21. Solution lubrifiante de tréfilage selon la revendication 20, **caractérisée en ce que** la quantité de cobalt et/ou de nickel (exprimé en métal) par rapport à la solution lubrifiante de tréfilage est comprise entre 50 et 5000 ppm.

## Patentansprüche

1. Verwendung einer wässrigen Suspension, die mindestens eine Verbindung vom Typ eines Kobalt- und/oder Nickelsalzes einer gesättigten oder ungesättigten Carbonsäure (i) oder eines Phosphatesters (ii) oder eines Kobalt- und/oder Nickelboracylats (iii) und mindestens eine nichtionische oder anionische grenzflächenaktive Substanz umfasst, wobei das Gewichtsverhältnis der Verbindung (i), (ii) und/oder (iii) zur grenzflächenaktiven Substanz zwischen 0,5 und 10 liegt, in einer Schmiermittellösung zum Drahtziehen als Haftvermittler für einen vermessingten Stahldraht und Kautschuk.

2. Verwendung einer wässrigen Suspension, die mindestens eine Verbindung vom Typ eines Kobalt- und/oder Nickelsalzes einer gesättigten oder ungesättigten Carbonsäure (i) oder eines Phosphatesters (ii) oder eines Kobalt- und/oder Nickelboracylats (iii) und mindestens eine nichtionische oder anionische grenzflächenaktive Substanz umfasst, wobei das Gewichtsverhältnis der Verbindung (i), (ii) und/oder (iii) zur grenzflächenaktiven Substanz zwischen 0,5 und 10 liegt, in einer Schmiermittellösung zum Drahtziehen als Haftvermittler für einen vermessingten Stahldraht während des Vorgangs des Drahtziehens.

3. Verwendung nach einem der vorangehenden Ansprüche, **dadurch gekennzeichnet, dass** die wässrige Suspension mindestens ein Kobalt- und/oder Nickelsalz einer gesättigten oder ungesättigten Carbonsäure, die 5 bis 40 Kohlenstoffatome enthält, umfasst.

4. Verwendung nach dem vorangehenden Anspruch, **dadurch gekennzeichnet, dass** die wässrige Suspension des Kobalt- und/oder Nickelsalzes von einer Säure der folgenden Formel abgeleitet ist:
R¹ - COOH
worin R¹ einen Alkylrest, Alkenylrest, der eine oder mehrere ethylenische Ungesättigtheiten hat, linear oder verzweigt ist, 5 bis 40 Kohlenstoffatome hat (das Kohlenstoffatom der Carboxylgruppe eingeschlossen) ; gegebenenfalls durch eine oder mehrere Hydroxylgruppen und/oder eine Carboxylfunktion substituiert ist, darstellt.

5. Verwendung nach dem vorangehenden Anspruch, **dadurch gekennzeichnet, dass** die Säure der vorgenannten Formel entspricht, wobei R¹ einen Alkylrest darstellt, der 7 bis 30 Kohlenstoffatome (das Kohlenstoffatom der Carboxylgruppe eingeschlossen) umfasst, gegebenenfalls durch eine oder mehrere Hydroxylgruppen und/oder eine Carboxylfunktion substituiert ist.

6. Verwendung nach Anspruch 1 oder 2, **dadurch gekennzeichnet, dass** die wässrige Suspension des Kobalt- und/oder Nickelsalzes eines Phosphatesters (ii) von einem Phosphatester der folgenden Formel abgeleitet ist:
[R²(OXₙ]ₚ-P(=O) (OM)_{p'}
R² ist ein gesättigter oder ungesättigter, aliphatischer, cycloaliphatischer oder aromatischer Kohlenwasserstoffrest, der 1 bis 3 Kohlenstoffatome enthält,
X ist ein linearer oder verzweigter Alkylenrest, der 2 bis 4 Kohlenstoffatome umfasst,
M ist ein Wasserstoffatom, ein Alkalimetall, vorzugsweise Natrium, Kalium) oder ein Ammoniumrest der Formel -N(R₃)⁺, worin R, die gleich oder unterschiedlich sein können, ein Wasserstoffatom, einen C₁-C₄-Alkylrest, gegebenenfalls ein Sauerstoffatom, enthält, darstellen, n einen Wert von 0 bis 100 hat,
p, p' 1 oder 2 sind, unter der Bedingung, dass p+p'=3.

7. Verwendung nach Anspruch 1 oder 2, **dadurch gekennzeichnet, dass** das Nickel- und/oder Kobaltboracylat die folgende Formel aufweist:
B (O-Co-A)ₘ(O-Ni-A)₃₋ₘ
in der A, die gleich oder unterschiedlich sind, einen Rest einer gesättigten oder ungesättigten Monocarbonsäure, die 7 bis 24 Kohlenstoffatome umfasst; eine Harzsäure; eine aromatische Säure, die 7 bis 11 Kohlenstoffatome umfasst; eine Naphthensäure darstellt, m eine ganze Zahl oder nicht ganze Zahl zwischen 0 und 3 ist.

8. Verwendung nach einem der vorangehenden Ansprüche, **dadurch gekennzeichnet, dass** die grenzflächenaktive Substanz aus den folgenden Verbindungen sowie ihren Gemischen ausgewählt ist:
Nichtionisch:
- polyoxyalkylenierte Alkylphenole, deren Alkylsubstituent C₆-C₁₂ ist;
- polyoxyalkylenierte Mono-, Di- oder Tri(alkylaryl)-phenole, deren Alkylsubstituent C₁-C₆ ist;
- aliphatische polyoxyalkylenierte C₈-C₂₂-Alkohole;
- polyoxyalkylenierte Triglyceride,
- polyoxyalkylenierte Fettsäuren,
- polyoxyalkylenierte Sorbitanester,
- polyoxyalkylenierte Fettamine,
- gegebenenfalls polyoxyalkylenierte Amide von C₈-C₂₀-Fettsäuren;
- Glucosamid, Glucamid;
- Alkylpolyglycoside;
- von N-Alkylaminen abgeleitete Glycerolamide;
- Produkte, die aus der Kondensation von Ethylenoxid mit einer hydrophoben Verbindung resultieren, welche aus der Kondensation von Propylenoxid mit Propylenglykol resultiert;
- Produkte, die aus der Kondensation von Ethylenoxid mit einer Verbindung resultieren, welche aus der Kondensation von Propylenoxid mit Ethylendiamin resultiert;
- die Produkte, die aus der Kondensation von Ethylenoxid mit einer hydrophoben Verbindung resultieren, welche aus der Kondensation von Propylenoxid mit einem Alkohol terpenischen Ursprungs resultiert;
- Aminoxide, wie die Oxide von C₁₀-C₁₈-Alkyldimethylaminen, die Oxide von C₈-C₂₂-Alkoxyethyl-dihydroxy-ethylaminen;
anionisch:
- Alkylestersulfonate der Formel R-CH(SO₃M)-COOR', worin R einen C₈-C₂₀-Alkylrest darstellt, R' einen C₁-C₆-Alkylrest darstellt und M ein Alkalikation, Ammonium-N(R₃)⁺ darstellt, worin R, die gleich oder unterschiedlich sind, ein Wasserstoffatom, einen Kohlenwasserstoffrest, der 1 bis 4 Kohlenstoffatome enthält, der gegebenenfalls Träger eines Hydroxylrestes ist, darstellt;
- Alkylsulfate oder Alkylarylsulfate der Formel ROSO₃M, worin R einen C₁₀-C₂₄-Alkyl- oder Hydroxyalkylrest darstellt, M ein Wasserstoffatom oder ein Kation derselben Definition wie oben darstellt, sowie deren ethoxylenierten (OE)-und/oder propoxyenierten (OP)-Derivate;
- sulfatierte, polyoxyalkylenierte Fettalkohole; polyoxyalkylenierte, sulfatierte Di(phenyl-1-ethyl)phenole; polyoxyalkylenierte, sulfatierte Tri(phenyl-1-ethyl)phenole; polyoxyalkylenierte, sulfatierte Alkylphenole;
- Alkylamidsulfate der Formel RCONHR'OSO₃M, worin R einen C₂-C₂₂-Alkylrest darstellt, R' einen C₂-C₃-Alkylrest darstellt, M ein Wasserstoffatom oder ein Kation derselben Definition wie oben darstellt, sowie ihre ethoxylenierten (OE)- und/oder propoxylenierten(OP)-Derivate;
- Salze von gesättigten oder ungesättigten C₈-C₂₄-Fettsäuren, C₉-C₂₀-Alkylbenzolsulfonate, primäre oder sekundäre C₈-C₂₂-Alkylsulfonate, Alkylglycerinsulfonate, sulfonierte Polycarbonsäuren, Paraffinsulfonate,
- Mono- oder Diesterphosphate von polyoxyalkylenierten Fettalkoholen, Mono- oder Diesterphosphate von polyoxyalkylenierten Di(phenyl-1-ethyl)-phenolen, Mono- oder Diesterphosphate von polyoxyalkylenierten Tri(phenyl-1-ethyl)phenolen, Mono- oder Diesterphosphate von polyoxyalkylenierten Alkylphenolen,
- N-Acyl-N-alkyltaurate, Alkylisethionate, Alkylsuccinamate, Alkylsulfosuccinate, Monoester oder Diester von Sulfosuccinaten, N-Acylsarcosinate, Sulfate von Alkylglycosiden, Polyethoxycarboxylate, wobei das Kation ein Alkalimetall, ein Ammonium-N-(R₃)⁺ ist, wobei R, die identisch oder nicht identisch sind, ein Wasserstoffatom, einen Kohlenwasserstoffrest, der 1 bis 4 Kohlenstoffatome umfasst, der gegebenenfalls Träger eines Hydroxylrestes ist, darstellt.

9. Verwendung nach einem der vorangehenden Ansprüche, **dadurch gekennzeichnet, dass** das Gewichtsverhältnis der Verbindung (i), (ii) und/oder (iii) zur grenzflächenaktiven Substanz zwischen 1 und 5 liegt.

10. Wässrige Suspension, die mindestens eine Verbindung vom Typ eines Kobalt- und/oder Nickelsalzes einer gesättigten oder ungesättigten Carbonsäure (i) oder eines Phosphatesters (ii) oder eines Kobalt- und/oder Nickelboracylats (iii) und mindestens eine nichtionische oder anionische Substanz umfasst, wobei das Gewichtsverhältnis der Verbindung (i), (ii) und/oder (iii) zur grenzflächenaktiven Substanz zwischen 0,5 und 10 liegt.

11. Suspension nach dem vorangehenden Anspruch, **dadurch gekennzeichnet, dass** das Kobalt- und/oder Nickelcarbonsäuresalz von einer Säure der folgenden Formel abgeleitet ist:
R¹ - COOH;
worin R₁ einen Alkylrest, Alkenylrest, der eine oder mehrere ethylenische Unsättigungen aufweist, linear oder verzweigt ist, 5 bis 40 Kohlenstoffatome hat (das Kohlenstoffatom der Carboxylgruppe eingeschlossen), der gegebenenfalls durch einen oder mehrere Hydroxylreste und/oder eine Carboxylfunktion substituiert ist, darstellt.

12. Suspension nach Anspruch 10 oder 11, **dadurch gekennzeichnet, dass** die Säure eine einzige Carboxylfunktion umfasst.

13. Suspension nach einem der Ansprüche 10 bis 12, **dadurch gekennzeichnet, dass** die Säure unter Palmitinsäure, Behensäure, Stearinsäure, Palmitoleinsäure, Ölsäure, Petroselensäure, Erucasäure, Linolsäure, Linolensäure, Rizinolsäure ausgewählt ist.

14. Suspension nach Anspruch 10, **dadurch gekennzeichnet, dass** das Kobalt- und/oder Nickelsalz eines Phosphatesters (ii) von einem Phosphatester der folgenden Formel abgeleitet ist:
[R²(OX)ₙ]ₚ-P(=O) (OM)_{p'},
worin R² ein aliphatischer, cycloaliphatischer oder aromatischer Kohlenwasserstoffrest ist, der gesättigt oder ungesättigt ist und 1 bis 30 Kohlenstoffatome enthält,
X ein linearer oder verzweigter Alkylenrest ist, der 2 bis 4 Kohlenstoffatome umfasst,
M ein Wasserstoffatom, ein Alkalimetall (vorzugsweise Natrium, Kalium) oder ein Ammoniumrest der Formelbindung - N(R₃)⁺ ist, worin R, die gleich oder unterschiedlich sind, ein Wasserstoffatom, einen C₁-C₄-Alkylrest, der gegebenenfalls ein Sauerstoffatom umfasst, darstellen,
n einen Wert von 0 bis 100 hat,
p, p' 1 oder 2 sind, unter der Bedingung, dass p+p'=3.

15. Suspension nach Anspruch 10, **dadurch gekennzeichnet, dass** das Nickel- und/oder Kobaltboracylat die folgende Formel aufweist:
B(O-Co-A)ₘ(O-Ni-A)₃₋ₘ
worin A, die gleich oder unterschiedlich sind, einen Rest einer gesättigten oder ungesättigten Monocarbonsäure, die 7 bis 24 Kohlenstoffatome enthält; einer Harzsäure; einer aromatischen Säure, die 7 bis 11 Kohlenstoffatome enthält; einer Naphthensäure darstellen, m eine ganze Zahl oder nicht ganze Zahl zwischen 0 und 3 ist.

16. Suspension nach einem der Ansprüche 10 bis 15, **dadurch gekennzeichnet, dass** die grenzflächenaktive Substanz unter den folgenden Verbindungen sowie ihren Gemischen ausgewählt ist:
Nichtionisch:
- polyoxyalkylenierte Alkylphenole, deren Alkylsubstituent C₆-C₁₂ ist;
- polyoxyalkylenierte Mono-, Di- oder Tri(alkylaryl)-phenole, deren Alkylsubstituent C₁-C₆ ist;
- aliphatische polyoxyalkylenierte C₈-C₂₂-Alkohole;
- polyoxyalkylenierte Triglyceride,
- polyoxyalkylenierte Fettsäuren,
- polyoxyalkylenierte Sorbitanester,
- polyoxyalkylenierte Fettamine,
- gegebenenfalls polyoxyalkylenierte Amide von C₈-C₂₀-Fettsäuren;
- Glucosamid, Glucamid;
- Alkylpolyglycoside;
- von N-Alkylaminen abgeleitete Glycerolamide;
- Produkte, die aus der Kondensation von Ethylenoxid mit einer hydrophoben Verbindung resultieren, welche aus der Kondensation von Propylenoxid mit Propylenglykol resultiert;
- Produkte, die aus der Kondensation von Ethylenoxid mit einer Verbindung resultieren, welche aus der Kondensation von Propylenoxid mit Ethylendiamin resultiert;
- die Produkte, die aus der Kondensation von Ethylenoxid mit einer hydrophoben Verbindung resultieren, welche aus der Kondensation von Propylenoxid mit einem Alkohol terpenischen Ursprungs resultiert;
- Aminoxide, wie die Oxide von C₁₀-C₁₈-Alkyldimethylaminen, die Oxide von C₈-C₂₂-Alkoxyethyl-dihydroxy-ethylaminen;
anionisch:
- Alkylestersulfonate der Formel R-CH(SO₃M)-COOR', worin R einen C₈-C₂₀-Alkylrest darstellt, R' einen C₁-C₆-Alkylrest darstellt und M ein Alkalikation, Ammonium-N(R₃)⁺ darstellt, worin R, die gleich oder unterschiedlich sind, ein Wasserstoffatom, einen Kohlenwasserstoffrest, der 1 bis 4 Kohlenstoffatome enthält, der gegebenenfalls Träger eines Hydroxylrestes ist, darstellt;
- Alkylsulfate oder Alkylarylsulfate der Formel ROSO₃M, worin R einen C₁₀-C₂₄-Alkyl- oder Hydroxyalkylrest darstellt, M ein Wasserstoffatom oder ein Kation derselben Definition wie oben darstellt, sowie deren ethoxylenierten (OE)-und/oder propoxyenierten (OP)-Derivate;
- sulfatierte, polyoxyalkylenierte Fettalkohole; polyoxyalkylenierte, sulfatierte Di(phenyl-1-ethyl)phenole; polyoxyalkylenierte, sulfatierte Tri(phenyl-1-ethyl)phenole; polyoxyalkylenierte, sulfatierte Alkylphenole;
- Alkylamidsulfate der Formel RCONHR'OSO₃M, worin R einen C₂-C₂₂-Alkylrest darstellt, R' einen C₂-C₃-Alkylrest darstellt, M ein Wasserstoffatom oder ein Kation derselben Definition wie oben darstellt, sowie ihre ethoxylenierten (OE)- und/oder propoxylenierten(OP)-Derivate;
- Salze von gesättigten oder ungesättigten C₈-C₂₄-Fettsäuren, C₉-C₂₀-Alkylbenzolsulfonate, primäre oder sekundäre C₈-C₂₂-Alkylsulfonate, Alkylglycerinsulfonate, sulfonierte Polycarbonsäuren, Paraffinsulfonate,
- Mono- oder Diesterphosphate von polyoxyalkylenierten Fettalkoholen, Mono- oder Diesterphosphate von polyoxyalkylenierten Di(phenyl-1-ethyl)-phenolen, Mono- oder Diesterphosphate von polyoxyalkylenierten Tri(phenyl-1-ethyl)phenolen, Mono- oder Diesterphosphate von polyoxyalkylenierten Alkylphenolen,
- N-Acyl-N-alkyltaurate, Alkylisothionate, Alkylsuccinamate, Alkylsulfosuccinate, Monoester oder Diester von Sulfosuccinaten, N-Acylsarcosinate, Sulfate von Alkylglycosiden, Polyethoxycarboxylate, wobei das Kation ein Alkalimetall, ein Ammonium-N-(R₃)⁺ ist, wobei R, die identisch oder nicht identisch sind, ein Wasserstoffatom, einen Kohlenwasserstoffrest, der 1 bis 4 Kohlenstoffatome umfasst, der gegebenenfalls Träger eines Hydroxylrestes ist, darstellt.

17. Suspension nach einem der Ansprüche 10 bis 16, **dadurch gekennzeichnet, dass** das Gewichtsverhältnis der Verbindung (i), (ii) und/oder (iii) zur grenzflächenaktiven Substanz zwischen 1 und 5 liegt.

18. Verfahren zur Herstellung einer Suspension nach einem der Ansprüche 10 bis 17, **dadurch gekennzeichnet, dass** man ein in Wasser lösliches Derivat einer Carbonsäure (i), eines Phosphatesters (ii) in Gegenwart mindestens einer grenzflächenaktiven Substanz in wäßrigem Milieu mit einem Kobalt- und/oder Nickelsalz in Kontakt bringt.

19. Verfahren zur Herstellung einer Suspension nach einem der Ansprüche 10 bis 17, **dadurch gekennzeichnet, dass** man die folgenden Stufen durchführt:
1) Man stellt eine Kobalt/Nickel-Verbindung her,
2) man stellt eine wässrige Lösung her, die mindestens eine grenzflächenaktive Substanz enthält,
3) man vermischt in der Wärme und unter Rühren die Verbindung und die wässrige Lösung derart, dass eine Emulsion erhalten wird,
4) man lässt die Emulsion abkühlen.

20. Schmiermittellösung zum Drahtziehen, die die Suspension nach einem der Ansprüche 10 bis 17 umfasst.

21. Schmiermittellösung zum Drahtziehen nach Anspruch 20, **dadurch gekennzeichnet, dass** die Menge an Kobalt und/oder Nickel (ausgedrückt als Metall), bezogen auf die Schmiermittellösung zum Drahtziehen, zwischen 50 und 5000 ppm liegt.

## Claims

1. Use, in a lubricating wire-drawing solution, as an adhesion agent for a wire of brass plated steel and rubber, of an aqueous suspension comprising at least one compound of the type constituted by a cobalt and/or nickel salt of a saturated or unsaturated carboxylic acid (i), or a phosphate ester (ii), or a cobalt and/or nickel boroacylate (iii), and at least one non ionic or anionic surfactant; the weight ratio of compound (i), (ii) and/or (iii) to the surfactant being in the range 0.5 to 10.

2. Use, in a lubricating wire-drawing solution, as a lubricating agent for a wire of brass plated steel during the wire-drawing operation, of an aqueous suspension comprising at least one compound of the type constituted by a cobalt salt and/or nickel salt of a saturated or unsaturated carboxylic acid (i), or a phosphate ester (ii), or a cobalt and/or nickel boroacylate (iii), and at least one non ionic or anionic surfactant; the weight ratio of compound (i), (ii) and/or (iii) to the surfactant being in the range 0.5 to 10.

3. Use according to one of the preceding claims, **characterized in that** the aqueous suspension comprises at least one cobalt and/or nickel salt of a saturated or unsaturated carboxylic acid (i), containing 5 to 40 carbon atoms.

4. Use according to the preceding claim, **characterized in that** the aqueous suspension of the cobalt and/or nickel salt derives from an acid with the following formula:
R¹-COOH;
in which formula R¹ represents an alkyl or alkenyl radical having one or more linear or branched ethylenically unsaturated bonds, containing 5 to 40 carbon atoms (including the carbon atom of the carboxylic group), optionally substituted with one or more hydroxyl radicals and/or a carboxylic function.

5. Use according to the preceding claim, **characterized in that** the acid corresponds to the formula defined above, in which R¹ represents an alkyl radical containing 7 to 30 carbon atoms (including the carbon atom of the carboxylic group), optionally substituted with one or more hydroxyl radicals and/or a carboxylic function.

6. Use according to claim 1 or claim 2, **characterized in that** the aqueous suspension of the cobalt and/or nickel salt of the phosphate ester (ii) derives from a phosphate ester with the following formula:
[R²(OX)ₙ]ₚ-P(=O)(OM)_{p'}
R² is a saturated or unsaturated aliphatic, cycloaliphatic or aromatic hydrocarbon radical containing 1 to 30 carbon atoms;
X is a linear or branched alkylene radical containing 2 to 4 carbon atoms;
M is a hydrogen atom, an alkali metal (preferably sodium or potassium), or an ammonium radical with formula -N(R₃)⁺ in which R, which may or may not be identical, represents a hydrogen atom, a C₁-C₄ alkyl radical, optionally comprising an oxygen atom;
n is a value from 0 to 100;
p, p' are equal to 1 or 2, with the proviso that p+p'=3.

7. Use according to claim 1 or claim 2, **characterized in that** the nickel and/or cobalt boroacylate has the following formula:
B(O-Co-A)ₘ(O-Ni-A)₃₋ₘ
in which formula:
A, which may or may not be identical, represent a residue of a saturated or unsaturated monocarboxylic acid containing 7 to 24 carbon atoms; a resin acid; an aromatic acid containing 7 to 11 carbon atoms; or a naphthenic acid;
m is an integral or non integral number in the range 0 to 3.

8. Use according to any one of the preceding claims, **characterized in that** the surfactant is selected from the following compounds and from mixtures thereof:
Non ionic:
• polyoxyalkylenated alkylphenols the alkyl substituent of which is C₆-C₁₂;
• polyoxyalkylenated mono-, di- or tri-(alkylaryl)phenols the alkyl substituent of which is C₁-C₆;
• polyoxyalkylenated C₈-C₂₂ aliphatic alcohols;
• polyoxyalkylenated triglycerides;
• polyoxyalkylenated fatty acids;
• polyoxyalkylenated sorbitan esters;
• polyoxyalkylenated fatty amines;
• C₈-C₂₀ fatty acid amides, optionally polyoxyalkylenated;
• glucosamide, glucamide;
• alkylpolyglycosides;
• glycerolamides derived from N-alkylamines;
• products resulting from condensing ethylene oxide with a hydrophobic compound resulting from condensing propylene oxide with propylene glycol;
• products resulting from condensing ethylene oxide with a compound resulting from condensing propylene oxide with ethylenediamine;
• products resulting from condensing ethylene oxide with a hydrophobic compound resulting from condensing propylene oxide with an alcohol of terpenic origin;
• oxides of amines such as oxides of C₁₀-C₁₈ alkyl dimethylamines, oxides of C₈-C₂₂ alkoxy ethyldihydroxyethylamines;
Anionic:
• alkylester sulphonates with formula R-CH(SO₃M)-COOR', in which R represents a C₈-C₂₀ alkyl radical, R' represents a C₁-C₆ alkyl radical and M represents an alkali or ammonium -N(R₃)⁺ cation in which R, which may or may not be identical, represents a hydrogen atom or a hydrocarbon radical containing 1 to 4 carbon atoms, optionally carrying a hydroxyl radical;
• alkylsulphates or alkylarylsulphates with formula ROSO₃M, in which R represents an alkyl radical or a C₁₀-C₂₄ hydroxyalkyl radical, M representing a hydrogen atom or a cation with the definition given above, and their ethoxylated (OE) derivatives and/or propoxylated (OP) derivatives;
• sulphated polyoxyalkylenated fatty alcohols; sulphated polyoxyalkylenated di(1-phenylethyl) phenols; sulphated polyoxyalkylenated tri(1-phenylethyl)phenols; sulphated polyoxyalkylenated alkylphenols;
• sulphated alkylamides with formula RCONHR'OSO₃M, in which R represents a C₂-C₂₂ alkyl radical, R' represents a C₂-C₃ alkyl radical, M representing a hydrogen atom or a cation with the definition given above, and their ethoxylated (OE) and/or propoxylated (OP) derivatives;
• salts of saturated or unsaturated C₈-C₂₄ fatty acids, C₉-C₂₀ alkylbenzene sulphonates, primary or secondary C₈-C₂₂ alkylsulphonates, alkylglycerol sulphonates, sulphonated polycarboxylic acids, paraffin sulphonates;
• polyoxyalkylenated fatty alcohol phosphate mono or diesters, polyoxyalkylenated tri(1-phenylethyl)phenol phosphate mono or diesters, polyoxyalkylenated alkylphenol phosphate mono or diesters;
• N-acyl N-alkyltaurates, alkylisethionates, alkylsuccinamates, alkylsulphosuccinates, sulphosuccinate mono or diesters, N-acyl sarcosinates, alkylglycoside sulphates, polyethoxycarboxylates, the cation being an alkali metal, an ammonium -N(R₃)⁺ in which R, which may or may not be identical, represents a hydrogen atom, a hydrocarbon radical containing 1 to 4 carbon atoms, optionally carrying a hydroxyl radical.

9. Use according to any one of the preceding claims, **characterized in that** the weight ratio of compound (i), (ii) and/or (iii) to the surfactant is in the range 1 to 5.

10. An aqueous suspension comprising at least one compound of the type constituted by a cobalt and/or nickel salt of a saturated or unsaturated carboxylic acid (i), or a phosphate ester (ii), or a cobalt and/or nickel boroacylate (iii); and at least one non-ionic or anionic surfactant; the weight ratio of compound (i), (ii) and/or (iii) to the surfactant being in the range 0.5 to 10.

11. A suspension according to the preceding claim, **characterized in that** the cobalt and/or nickel salt of the carboxylic acid derives from an acid with the following formula:
R¹-COOH;
in which formula R¹ represents an alkyl or alkenyl radical having one or more linear or branched ethylenically unsaturated bonds containing 5 to 40 carbon atoms (including the carbon atom of the carboxylic group), optionally substituted with one or more hydroxyl radicals and/or a carboxylic function.

12. A suspension according to claim 10 or claim 11, **characterized in that** the acid comprises a single carboxylic function.

13. A suspension according to one of claims 10 to 12, **characterized in that** the acid is selected from palmitic, behenic, stearic, palmitoleic, oleic, petroselenic, erucic, linoleic, linolenic or ricinoleic acid.

14. A suspension according to claim 10, **characterized in that** the cobalt and/or nickel salt of the phosphate ester (ii) derives from a phosphate ester with the following formula:
[R²(OX)ₙ]ₚ-P(=O)(OM)_{p'}
R² is a saturated or unsaturated aliphatic, cycloaliphatic or aromatic hydrocarbon radical containing 1 to 30 carbon atoms;
X is a linear or branched alkylene radical containing 2 to 4 carbon atoms;
M is a hydrogen atom, an alkali metal (preferably sodium, potassium), or an ammonium radical with formula -N(R₃)⁺ in which R, which may or may not be identical, represents a hydrogen atom, a C₁-C₄ alkyl radical, optionally comprising an oxygen atom;
n is a value from 0 to 100;
p, p' are equal to 1 or 2, with the proviso that p+p'=3.

15. A suspension according to claim 10, **characterized in that** the nickel and/or cobalt boroacylate has the following formula:
B(O-Co-A)ₘ(O-Ni-A)₃₋ₘ
in which formula:
A, which may or may not be identical, represents a residue of a saturated or unsaturated monocarboxylic acid containing 7 to 24 carbon atoms; a resin acid; an aromatic acid containing 7 to 11 carbon atoms; or a naphthenic acid;
m is an integral or non integral number in the range 0 to 3.

16. A suspension according to any one of claims 10 to 15, **characterized in that** the surfactant is selected from the following compounds, and mixtures thereof:
Non ionic:
• polyoxyalkylenated alkylphenols the alkyl substituent of which is C₆-C₁₂;
• polyoxyalkylenated mono-, di- or tri-(alkylaryl)phenols the alkyl substituent of which is C₁-C₆;
• polyoxyalkylenated C₈-C₂₂ aliphatic alcohols;
• polyoxyalkylenated triglycerides;
• polyoxyalkylenated fatty acids;
• polyoxyalkylenated sorbitan esters;
• polyoxyalkylenated fatty amines;
• C₈-C₂₀ fatty acid amides, optionally polyoxyalkylenated;
• glucosamide, glucamide;
• alkylpolyglycosides;
• glycerolamides derived from N-alkylamines;
• products resulting from condensing ethylene oxide with a hydrophobic compound resulting from condensing propylene oxide with propylene glycol;
• products resulting from condensing ethylene oxide with a compound resulting from condensing propylene oxide with ethylenediamine;
• products resulting from condensing ethylene oxide with a hydrophobic compound resulting from condensing propylene oxide with an alcohol of terpenic origin;
• oxides of amines such as oxides of C₁₀-C₁₈ alkyl dimethylamines, oxides of C₈-C₂₂ alkoxy ethyldihydroxyethylamines;
Anionic:
• alkylester sulphonates with formula R-CH(SO₃M)-COOR', in which R represents a C₈-C₂₀ alkyl radical, R' represents a C₁-C₆ alkyl radical and M represents an alkali or ammonium -N(R₃)⁺ cation in which R, which may or may not be identical, represents a hydrogen atom or a hydrocarbon radical containing 1 to 4 carbon atoms, optionally carrying a hydroxyl radical;
• alkylsulphates or alkylarylsulphates with formula ROSO₃M, in which R represents an alkyl radical or a C₁₀-C₂₄ hydroxyalkyl radical, M representing a hydrogen atom or a cation with the definition given above, and their ethoxylated (OE) derivatives and/or propoxylated (OP) derivatives;
• sulphated polyoxyalkylenated fatty alcohols; sulphated polyoxyalkylenated di(1-phenylethyl) phenols; sulphated polyoxyalkylenated tri(1-phenylethyl)phenols; sulphated polyoxyalkylenated alkylphenols;
• sulphated alkylamides with formula RCONHR'OSO₃M, in which R represents a C₂-C₂₂ alkyl radical, R' represents a C₂-C₃ alkyl radical, M representing a hydrogen atom or a cation with the definition given above, and their ethoxylated (OE) and/or propoxylated (OP) derivatives;
• salts of saturated or unsaturated C₈-C₂₄ fatty acids, C₉-C₂₀ alkylbenzene sulphonates, primary or secondary C₈-C₂₂ alkylsulphonates, alkylglycerol sulphonates, sulphonated polycarboxylic acids, paraffin sulphonates;
• polyoxyalkylenated fatty alcohol phosphate mono or diesters, polyoxyalkylenated tri(1-phenylethyl)phenol phosphate mono or diesters, polyoxyalkylenated alkylphenol phosphate mono or diesters;
• N-acyl N-alkyltaurates, alkylisethionates, alkylsuccinamates, alkylsulphosuccinates, sulphosuccinate mono or diesters, N-acyl sarcosinates, alkylglycoside sulphates, polyethoxycarboxylates, the cation being an alkali metal, an ammonium -N(R₃)⁺ in which R, which may or may not be identical, represents a hydrogen atom or a hydrocarbon radical containing 1 to 4 carbon atoms, optionally carrying a hydroxyl radical.

17. A suspension according to any one of claims 10 to 16, **characterized in that** the weight ratio of compound (i), (ii) and/or (iii) to the surfactant is in the range 1 to 5.

18. A process for preparing a suspension according to any one of claims 10 to 17, **characterized in that** a water-soluble derivative of a carboxylic acid (i), a phosphate ester (ii), is brought into contact in an aqueous medium with a cobalt and/or nickel salt in the presence of at least one surfactant.

19. A process for preparing a suspension according to any one of claims 10 to 17, **characterized in that** the following steps are carried out:
1/ melting a cobalt/nickel compound;
2/ preparing an aqueous solution comprising at least one surfactant;
3/ mixing, with heat and stirring, the compound and aqueous solution, to obtain an emulsion;
4/ allowing the emulsion to cool.

20. A lubricating wire-drawing solution comprising a suspension according to any one of claims 10 to 17.

21. A lubricating wire-drawing solution according to claim 20, **characterized in that** the quantity of cobalt and/or nickel (expressed as the metal) with respect to the lubricating wire-drawing solution is in the range 50 to 5000 ppm.
